# EUROPÄISCHE PATENTSCHRIFT

(11) **EP 1 045 786 B1**
(45) Veröffentlichungstag und Bekanntmachung des Hinweises auf die Patenterteilung: **30.08.2006**
(21) Anmeldenummer: 99947195.6
(22) Anmeldetag: 10.07.1999
(51) Int. Cl.: B60T 8/96, B60T 8/36, B60T 8/40

(54) **VERFAHREN UND SYSTEM ZUR STEUERUNG UND/ODER REGELUNG VON BETRIEBSABLÄUFEN BEI EINEM KRAFTFAHRZEUG**
METHODS AND SYSTEM FOR CONTROLLING AND/OR REGULATING OPERATIONS OCCURRING IN A MOTOR VEHICLE
PROCEDE ET SYSTEME DE COMMANDE ET/OU DE REGLAGE DE SEQUENCES DE FONCTIONNEMENT D'UN VEHICULE AUTOMOBILE

(30) Priorität: 25.09.1998 DE 19843861
(43) Veröffentlichungstag der Anmeldung: 25.10.2000
(73) Patentinhaber: ROBERT BOSCH GMBH, 70442 Stuttgart (DE)
(72) Erfinder: KOERNER, Gotthilf, D-71287 Weissach (DE); ENKE, Dietmar, D-74354 Besigheim (DE); GOTTWICK, Ulrich, D-70192 Stuttgart (DE); SCHUBERT, Michael, D-75382 Althengstett (DE)
(86) Internationale Anmeldenummer: PCT/DE1999/002136
(87) Internationale Veröffentlichungsnummer: WO 2000/018625

(56) Entgegenhaltungen:
- EP-A- 0 175 843
- DE-A- 19 633 952
- DE-C- 19 523 108
- US-A- 5 648 759
- PATENT ABSTRACTS OF JAPAN vol. 1996, no. 01, 31. Januar 1996 (1996-01-31) & JP 07 242168 A (FUJITSU TEN LTD), 19. September 1995 (1995-09-19)
- PATENT ABSTRACTS OF JAPAN vol. 1996, no. 02, 29. Februar 1996 (1996-02-29) & JP 07 251731 A (NIPPONDENSO CO LTD), 3. Oktober 1995 (1995-10-03)
- PATENT ABSTRACTS OF JAPAN vol. 1999, no. 01, 29. Januar 1999 (1999-01-29) -& JP 10 278771 A (TOYOTA MOTOR CORP), 20. Oktober 1998 (1998-10-20)

## Beschreibung

### Stand der Technik

Die Erfindung betrifft Verfahren und ein System zur Steuerung und/oder Regelung von Betriebsabläufen bei einem Kraftfahrzeug gemäß den Oberbegriffen der unabhängigen Patentansprüche.

Der Stand der Technik zeigt Systeme, insbesondere Bremssysteme mit Steuergeräten, mit elektronischen Bauteilen, bei denen zur Kühlung der elektronischen Bauteile konstruktive Maßnahmen und/oder die Verwendung von Kühlelementen benutzt werden. Darüber hinaus sind die Bauteile im Fahrzeugbau üblicherweise bis zu bestimmten Temperaturen zeitlich begrenzt belastbar. Die geforderten Belastungsprofile für Motorraumbedingungen werden beispielsweise mit einer Bauteilspezifikation bis 140°C abgedeckt. Bei sehr hohen Temperaturen (beispielsweise über 140°C) werden die elektronischen Bauteile thermisch überlastet und zerstört.

Daneben sind Steuergeräte, insbesondere zur Steuerung einer Bremsanlage eines Fahrzeugs in vielfacher Weise bekannt. Solche Bremsanlagen sind in vielerlei Variationen bekannt.

Eine solche Bremsanlage besitzt wenigstens einen Bremskreis in dem wenigstens ein, das Druckmedium förderndes Mittel, insbesondere bei z.B. hydraulischen Bremsanlagen eine Pumpe, die auch als Rückförderpumpe bezeichnet wird, angeordnet ist. Darüber hinaus kann optional wenigstens ein weiteres, das Druckmedium förderndes Mittel, insbesondere eine selbstansaugende Ladepumpe vorgesehen sein, welche mit einer Saugleitung an einen Vorratsbehälter für das Druckmedium angeschlossen ist. Der Ein- und Auslaß des Druckmediums in den Bremskreis wird ebenso wie der Ein- und Auslaß des Druckmediums in den jeweiligen Radbremszylinder über Absperrvorrichtungen für Einlaß und/oder Auslaß und/oder Durchlaß des Druckmediums, insbesondere Ventile gesteuert.

Auch in einem elektrohydraulischen Bremssystem, wie in der DE 195 48 248 A1 findet sich prinzipiell diese Anordnung, bei der das Druckmedium durch eine Pumpe über einen zwischengeschalteten Druckspeicher Ventilen zugeführt wird bzw. von Ventilen kommt. Dabei wird das Druckmedium durch Öffnen und Schließen der Ein- und Auslaßventile entsprechend dem Bremswunsch des Fahrers und/oder den Ansteuersignalen einer vermittelnden Logik wie z.B. eines Antiblockiersystems (ABS), einer Antriebsschlupfregelung (ASR), einer Fahrdynamikregelung (FDR, ESP) oder auch einer adaptiven Fahrgeschwindigkeitsregelung (Adaptive Cruise Control, ACC) in die Radbremszylinder eingeleitet bzw. aus ihnen ausgelassen und so der Bremsdruck gesteuert. Bei einem elektrohydraulischen Bremssystem wird der Bremsdruck und/oder Systemdruck elektrisch durch die Ansteuerung der Absperrvorrichtungen für Einlaß und/oder Auslaß und/oder Durchlaß des Druckmediums und/oder durch das, das Druckmedium fördernde Mittel gesteuert. Ebenso ist dies bei einer hydraulischen Bremsanlage mit hydraulischer Bremskraftverstärkung und einer pneumatischen Bremsanlage realisiert.

Vollständige Bremssysteme mit deren Steuergeräten sind z.B. aus Bosch, "Kraftfahrtechnisches Taschenbuch", 22. Auflage, Seite 624-677 bekannt.

In den bekannten Bremssystemen sind unterschiedliche Verfahren zur Steuerung der Bremsanlage realisierbar.

In der DE 195 48 248 A1 beispielsweise werden Verfahren und Vorrichtung zur Steuerung einer Pumpe eines elektrohydraulischen Bremssystems offenbart, bei welchen die Pumpe mit einem bedarfsgerecht vorgebbaren Pulspausenverhältnis, also Taktverhältnis ansteuerbar ist. Bei z.B. einer Antriebsschlupfregelung (ASR), einem Antiblockiersystem (ABS), einer Fahrdynamikregelung (FDR, ESP), einer adaptiven Fahrgeschwindigkeitsregelung (ACC) oder einer hydraulischen Bremskraftverstärkung (HBV) ist die dabei verwendete Steuerung des Bremsdruckes in bestimmten Situationen und die dazu notwendige Ansteuerung beispielsweise der Ventile oder der Pumpe ebenfalls bekannt.

Aus der DE 196 15 449 A1 ist ein Verfahren und eine Vorrichtung zur Steuerung der Bremsanlage eines Fahrzeugs der Gestalt bekannt, daß aus einem durch den Fahrer beeinflußbaren Druck der Bremsanlage ein Bremswunsch des Fahrers gebildet wird, in dessen Abhängigkeit die Bremsanlage gesteuert wird. Diese Bremswunscherkennung ist ebenfalls über die Auswertung der Bremspedalbewegung bekannt.

Die Schrift DE 196 33 952 A1 beschreibt eine elektronische Steuerung mit Fehlerdiagnosefunktion zum Betreiben eines Stellgliedes mit einer Ansteuerschaltung zum Ansteuern des Stellgliedes und einer Überwachungsvorrichtung zum Überwachen eines Operationszustandes der Ansteuerschaltung. Die Überwachungsvorrichtung weist dabei eine Überhitzungs-Überwachungsvorrichtung zum Überwachen der Temperatur des IC-Gehäuses der zugehörigen elektronischen Steuereinheit auf. Mit Hilfe dieser Überwachung kann eine ungewöhnlich hohe Temperatur erfasst werden, die den Zusammenbruch eines ein Stellglied ansteuernden ICs oder eines IC-Gehäuses anzeigt.

### Aufgabe und Vorteile der Erfindung

Die Bauelemente im Fahrzeugbau sind zeitlich begrenzt auf Temperaturen beispielsweise bis 140°C spezifiziert. Dennoch führt die Erhitzung im Steuergerät durch die angesprochenen zu verwendenden Verfahren bzw. Regelungen und/oder Steuerungen zu einer Verkürzung der Lebensdauer der elektrischen Bauelemente und schließlich zur thermischen Zerstörung. Daneben erhöht sich bei Erwärmung der Bauteile deren Widerstand, was zu einer Absenkung der maximal fließenden Ströme und damit eventuell zu Funktionseinbußen führen kann. Hohe Umgebungstemperaturen beispielsweise im Motorraum, wirken sich dabei zusätzlich ungünstig aus. Die Erwärmung im Steuergerät bzw. elektronischen Schaltung und/oder im gesamten Bremssystem entsteht beispielsweise durch fließende Ströme und/oder mechanische Vorgänge wie z.B. Reibung.

Da die Erwärmung bei aktiver Regelung größer als im passiven Zustand ist, ist bei den relativ kurzen Eingriffen von beispielsweise einer Fahrdynamikregelung (FDR, ESP) oder eines Antiblockiersystems (ABS)mit geringerer Erwärmung zu rechnen, als beispielsweise bei einer Antriebsschlupfregelung (ASR), bei welcher der Regeleingriff über einen längeren Zeitraum, beispielsweise bis zu einer Minute aktiv ist. Ist die Bremsanlage darüber hinaus beispielsweise zusätzlich in Form einer elektrohydraulischen Bremse (EHB) und/oder mit hydraulischer Bremskraftverstärkung (HBV) ausgebildet, so können die Regeleingriffe wesentlich länger beispielsweise bis zu einer Stunde aktiv sein.

Generell gilt, besonders bei länger wirkenden aktiven Regeleingriffen unabhängig von Regelung und System (z. B. ABS, FDR, ASR, EHB, HBV, etc.), daß die Bauteileerwärmung nicht mehr vernachlässigbar ist und demnach diese durch Maßnahmen so gering wie möglich gehalten werden muß.

Diese Aufgabe wird dadurch gelöst, daß bei Überschreiten wenigstens einer Grenztemperatur wenigstens eine Maßnahme durchgeführt werden, bei der bei Bedarf wenigstens eine Daueransteuerung wenigstens eines ein Druckmedium fördernden Mittels des Bremssystems mit einer vorgebbaren und/oder variablen Zeitdauer durchgefiihrt wird. Darüber hinaus kann in weiteren Maßnahmen das Steuergerät und/oder das Bremssystem in einen Low-Power-Modus geschalten werden.

Unter Low-Power-Modus ist ein Modus mit verlustleistungsreduziertem Regeleingriff bzw. Regeleingriffen zu verstehen. Die Erfassung der dafür maßgeblichen Temperatur kann mittels Temperaturerfassungsmitteln, insbesondere Sensorik, die wenigstens teilweise in thermischem Kontakt angeordnet sind und/oder Temperaturermittlungsverfahren, z.B. ein Temperatur-Schätzmodell und/oder eine Auswertung typischer, funktioneller, temperaturabhängiger Veränderungen, wie z.B. dem Schwingungsverhalten von Druckreglern bei Hochtemperatur, erfolgen. Ist diese wenigstens eine vorgebbare Temperaturgrenze erreicht, so werden wärmeerzeugende Ansteuerungen in dem Zustand betrieben, in dem die Verlustleistung so gering wie möglich ist.

Daneben kann nicht nur eine Temperaturgrenze Verwendung finden, sondern mehrere Temperaturschwellen, wobei die Überschreitung einer solchen Temperaturschwelle jeweils zugeordnete Maßnahmen bzw. wenigstens eine Maßnahme mit bestimmten Funktionalitäten und/oder Regelverfahren nach sich zieht.

Darüber hinaus wird die Aufgabe durch die Merkmale der Ansprüche gelöst, aus denen sich auch weitere Vorteile ergeben.

Speziell bei einem Bremssystem kann erfindungsgemäß durch eine gezielte Pumpenansteuerung und/oder eine angepaßte Bremsdruck- bzw. Systemdrucksteuerung und/oder eine angemessene Ventilansteuerung und/oder mit einer Funktionsabschaltung und/oder einer Modifizierung der Bremswunscherkennung, wie dies in den Ausführungsbeispielen offenbart ist eine Verringerung der Verlustleistung erzielt werden.

Neben der Verwendung von Bauteilen mit geringer Verlustleistung sowie der Einbringung konstruktiver Maßnahmen oder der Verwendung von Kühlkörpern bieten diese Verfahren eine Möglichkeit, den Temperaturanstieg speziell in einem Steuergerät, insbesondere in einem Bremssystem, und/oder die Sättigungstemperatur bei extrem langer Regelung oder langen Regeleingriffen deutlich abzusenken. Damit kann die Temperatur im Steuergerät und/oder im Bremssystem gesenkt und/oder ein Anstieg verlangsamt oder verhindert werden. Dadurch ist eine Funktionserhaltung eventuell mit geringen Einschränkungen der Funktionalität auch unter Bedingungen möglich, unter denen bisher kein Betrieb mehr möglich war. Darüber hinaus kann durch die Verwendung dieser Verfahrensweisen auf die genannten konstruktiven Änderungen im oder am Steuergerät und/oder Kühlkörpereinbau zur besseren Wärmeableitung verzichtet werden.

Andererseits könnten Bauteile verwendet werden, die für eine geringere Maximaltemperatur spezifiziert sind und somit ein Kostenreduktinspotential bieten.

### Zeichnung

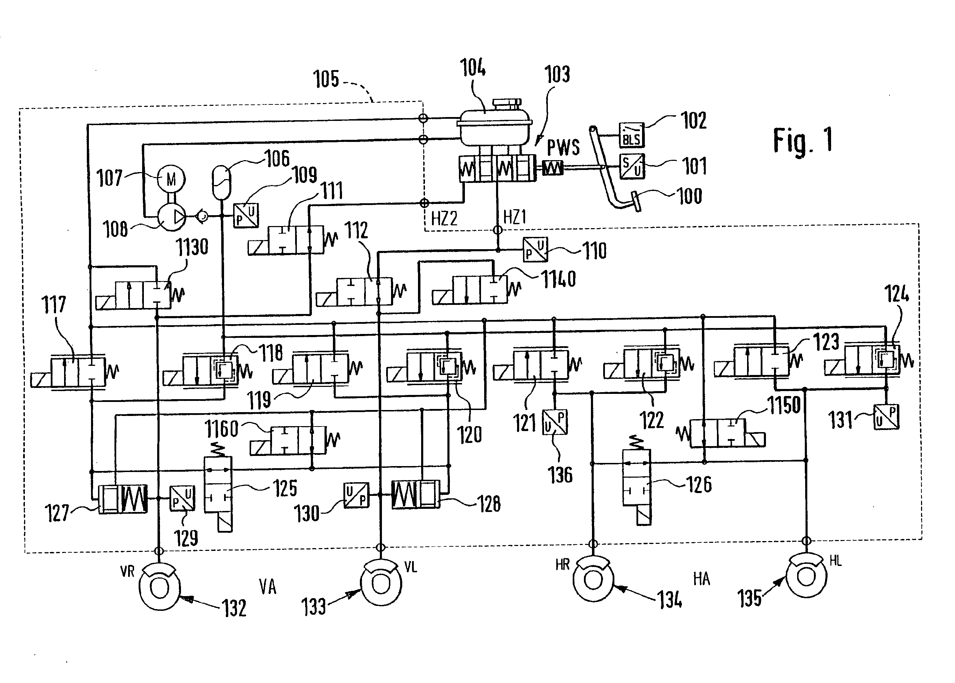

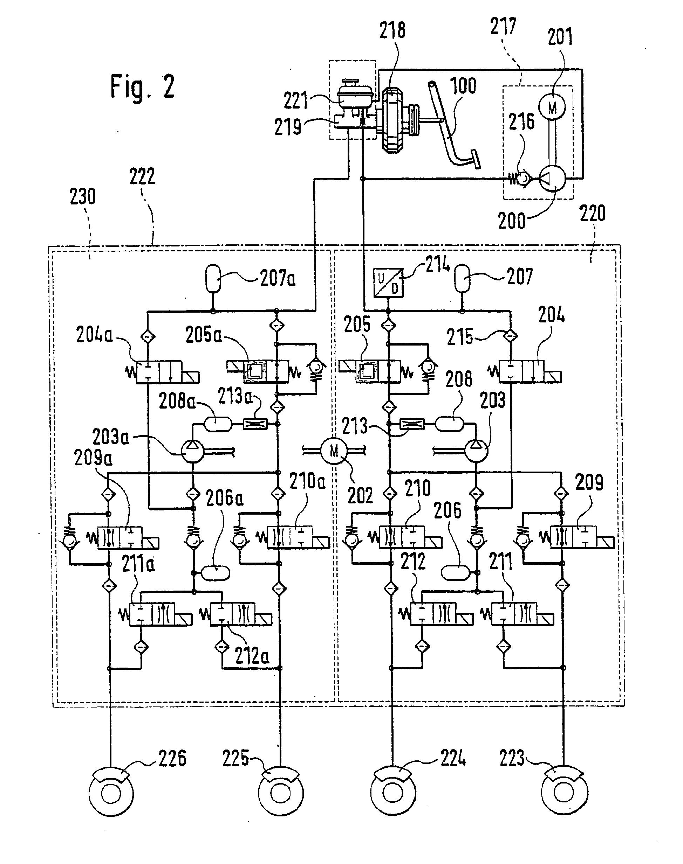

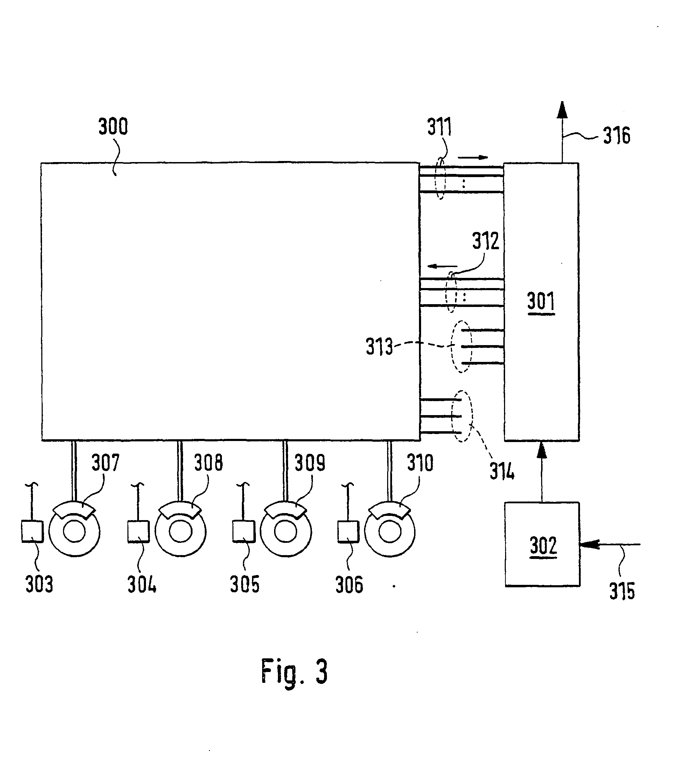

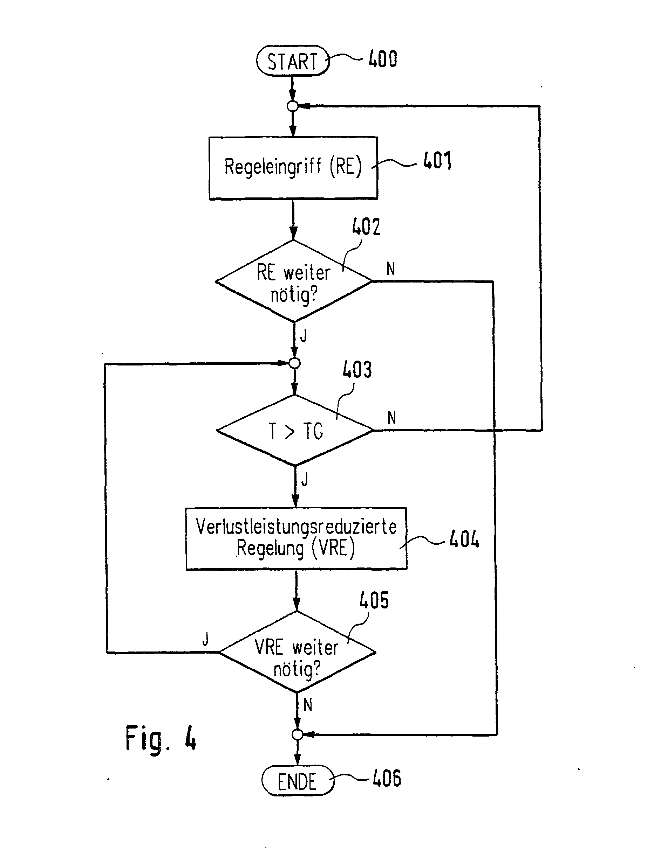

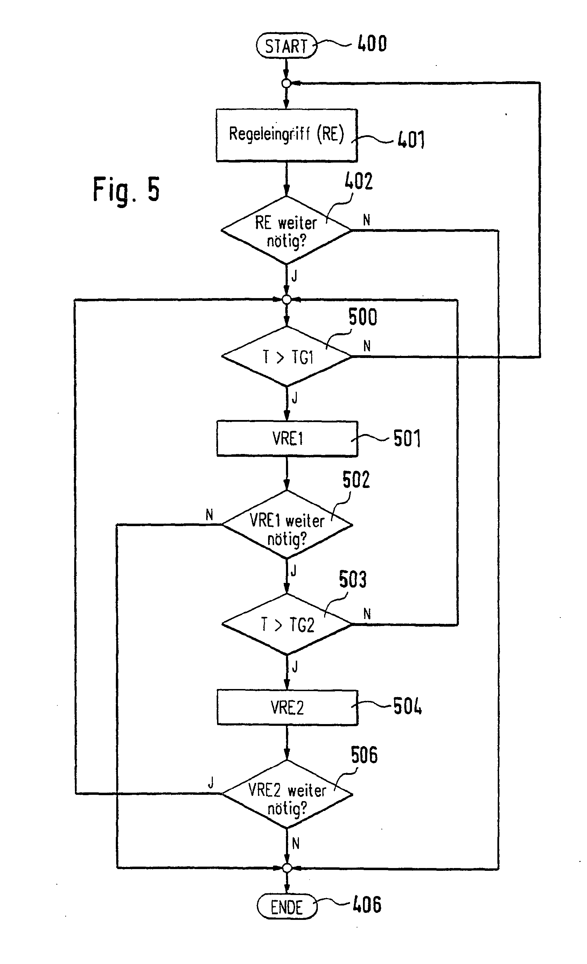

In Figur 1 ist beispielhaft eine elektrohydraulische Bremsanlage dargestellt. Daneben zeigt Figur 2 ebenfalls beispielhaft eine hydraulische Bremsanlage wie sie z. B. bei einem Antiblockiersystem oder einer Fahrdynamikregelung Verwendung finden kann. In Figur 3 ist schließlich in schematisierter Form ein Bremssystem mit Bremshydraulik und Steuergerät bzw. Steuergeräten dargestellt. Figur 4 zeigt anhand eines Flußdiagramms erfindungsgemäße Verfahren anhand einer Temperaturschwelle. Die Verwendung mehrerer, wenigstens zweier Temperaturschwellen und eine damit verbundene Funktionszuordnung bzw. eine Zuordnung wenigstens einer verlustleistungsreduzierten Regelung ist in Figur 5 dargestellt.

### Beschreibung der Ausführungsbeispiele

In den Ausführungsbeispielen sind zwei Bremssysteme und deren Bremsanlagen als Beispiel für die im Stand der Technik erwähnten hydraulischen, pneumatischen, elektrohydraulischen, hydraulisch verstärkten (HBV), etc. Bremsanlagen und Bremssysteme herausgestellt. Der Gegenstand der Erfindung ist mit geringen Variationen in allen zugehörigen Systemen realisierbar.

Figur 1 zeigt ein bevorzugtes Ausführungsbeispiel einer elektrohydraulischen Bremsanlage. Dabei ist ein Hauptbremszylinder 103 mit einem Vorratsbehälter 104 dargestellt. An den Hauptbremszylinder 103 ist ein vom Fahrer betätigbares Bremspedal 100 angebracht. Zwischen Bremspedal 100 und Hauptbremszylinder 103 ist ein Pedalwegsimulator PWS zwischengeschaltet. Der Pedalwegsimulator simuliert bei Betätigen des Bremspedals für den Fahrer eine Gegenkraft.

Mit dem Bremspedal 100 ist hier ein Bremspedalschalter 102 verbunden, welcher bei Betätigen des Bremspedals schließt. Daneben ist an dem Bremspedal bzw. der damit verbundenen Kolbenstange eine Meßeinrichtung 101 zur Erfassung der Auslenkung des Bremspedals vorgesehen. Mit 105 ist ein Hydroaggregat vorgesehen, welches Ventil- und Pumpenanordnungen zur Steuerung der Radbremsen 132 bis 135 bzw. des Druckmediums enthält.

An den Hauptbremszylinder sind beispielsweise zwei Bremskreise HZ1 und HZ2 angeschlossen. In diesen Bremskreisen sind jeweils ein Trennventil 111 bzw. 112 eingebunden, welche bei elektrisch gesteuerter Bremsanlage durch Bestromung geschlossen werden. Vor dem Trennventil kann in wenigstens einem Bremskreis mittels Drucksensor 110 der vom Fahrer über die Bremspedalbetätigung aufgebrachte Druck erfaßt werden. Werden diese Trennventile 111, 112 durch Bestromung geschlossen ist der Hauptbremszylinder 103 hydraulisch vom Druckregelsystem abgetrennt. In besagten Druckregelsystemen ist für jede Radbremse 132 bis 135 für die Bremsdruckregelung ein Druckmodulator enthalten. Bei den Radbremsen steht V für vorn und H für hinten. Somit sind die Radbremsen hier beispielhaft mit vorne rechts VR 132, vorne links VL 133, hinten rechts HR 134 und hinten links HL 135 bezeichnet. Die gesamten Achsen werden mit VA für die Vorderachse und HA für die Hinterachse benannt.

Die zugehörigen Druckmodulatoren enthalten dabei jeweils ein Einlaßventil 118 bzw. 120 bzw. 122 bzw. 124. Daneben je ein Auslaßventil 117 bzw. 119 bzw. 121 bzw. 123. Außerdem ist in je einer solchen Druckmodulationseinrichtung je ein Drucksensor 129 bzw. 130 bzw. 136 bzw. 131 enthalten, der den Druck in der zur Radbremse führenden Leitung mißt. Die Vielzahl der Drucksensoren, u.a. ist am Ausgang des Druckspeichers 106 ein weiterer Sensor 109 vorgesehen, kann ergänzt oder ersetzt werden durch die Verwendung wenigstens eines Schätzmodells für die herrschenden Druckverhältnisse. Bei einem solchen Schätzmodell wird beispielsweise aus der Pumpendrehzahl, den Ventilöffnungs- und -schließzeiten, etc. auf das Fördervolumen bzw. den Druck im Druckmedium geschlossen. In den beiden Vorderraddruckmodulatoren befindet sich hier je ein Medientrennkolben 127 und 128 jeweils zwischen den Ventilen und dem jeweiligen Drucksensor 129 bzw. 130 bzw. der jeweiligen Radbremse 132 bzw. 133. Die jeweiligen Druckmodulatoren sind über Ausgleichsventile 125 bzw. 126 verbunden, die bei Bestromung voneinander unabhängig gesteuert werden können. Im unbestromten Zustand sind diese Ausgleichsventile geöffnet und schaffen eine Verbindung zweier Radbremsen.

Daneben sind optional Entlastungsventile 1160 und 1150 je Achse vorgesehen, die in unbestromtem Zustand den Druckabbau aus den Raddruckmodulatoren einer Achse erlauben. Über sie erfolgt eine Verbindung der Druckmodulatoren einer Achse mit den zum Vorratsbehälter 104 führenden Rückführleitungen für das Druckmedium. Im elektrisch gesteuerten Betriebszustand sind diese beiden Ventile 1150 und 1160 permanent bestromt, d.h. geschlossen, weshalb diese optional vorgesehen sind und beispielsweise unter Verzicht auf einen schnelleren Druckausgleich weggelassen werden können.

Ebenfalls optional ist für jeden Vorderraddruckmodulator jeweils ein Temperaturkompensationsventil 113o bzw. 114o vorgesehen. Diese Ventile 113o und 114o sind in unbestromtem Zustand geschlossen und werden zum Druckabbau aus dem Druckmodulator eines Vorderrades durch Bestromung geöffnet, wenn bestimmte Bedingungen, beispielsweise eine sehr lange Bremsdauer und ein dadurch bedingter, langer Regeleingriff vorliegen. Die Temperaturkompensationsventile 113o, 114o verbinden die Bremsleitung zur jeweiligen Radbremse mit der Rücklaufleitung. Diese Ventile 113o, 114o dienen speziell der Kompensation der Druckverhältnisse bei hohen Temperaturen, hervorgerufen beispielsweise durch eine lange Bremsdauer. Tritt diese Erhöhung der Temperatur beispielsweise durch andere Maßnahmen oder kürzere Bremsdauer nicht auf, können diese ebenfalls weggelassen werden.

Die für die Bremsdruckmodulation erforderliche Energie entsteht aus wenigstens einer Pumpe 108, die mittels Motor 107 angetrieben wird. Dieser ist als Zwischenpuffer ein Speicher 106 für das Druckmedium nachgeschaltet, wobei der im Speicher 106 herrschende Druck durch einen Drucksensor 109 erfaßt wird. Die von der Pumpe 108 ausgehende Druckleitung führt zu den Einlaßventilen 118, 120, 122 und 124 der Radbremsen 132 bis 135. Saugseitig ist die Pumpe 108 mit dem Vorratsbehälter 104 verbunden. Weitere Einzelheiten sind der in Figur 1 dargestellten hydraulischen Schaltung des bevorzugten Ausführungsbeispiels zu entnehmen.

Dabei kann bei den erfindungsgemäßen Verfahren und Systemen die Gestalt einzelner oder aller Ventile bzw. Ventilanordnungen ebenso variieren wie bei Verwendung mehrerer Pumpen deren Position und/oder Antriebsstruktur mittels wenigstens eines Motors. Die im weiteren beschriebene erfindungsgemäße Vorgehensweise wird jedoch nicht nur in Verbindung mit einer solchen Bremsanlage vorteilhaft angewendet, sondern kann bei jedem Bremssystem bzw. jeder Bremsanlage eines Fahrzeuges eingesetzt werden. Dabei sei die Bremsanlage nach Figur 1 nur beispielhaft herausgestellt.

Ebenfalls beispielhaft bezüglich der Fülle von Bremsanlagen ist die hydraulische Bremsanlage nach Figur 2. Dabei ist hier speziell eine Bremsanlage mit Bremskraftverstärker 218 dargestellt. Bei Verwendung beispielsweise einer hydraulischen Bremskraftverstärkung wird dieser Bremskraftverstärker 218 durch die hydraulische Bremskraftverstärkung ersetzt, wodurch dann auch ein höherer als der durch den Fahrer über den Bremskraftverstärker einspeisbare Druck möglich wäre.

In diesem Ausführungsbeispiel ist mit 100 ein durch den Fahrer betätigbares Bremspedal angebracht. Das Bremspedal 100 ist über eine Kolbenstange und besagten Bremskraftverstärker 218 mit dem Hauptbremszylinder 219 verbunden. Ebenfalls mit dem Hauptbremszylinder verbunden ist der Vorratsbehälter 221. Block 217 stellt eine Vorladepumpenanordnung dar, bestehend aus Pumpenmotor 201 der Vorladepumpe 200 selbst und einem aus Sicherheitsgründen angebrachten Rückschlagventil 216. Um größere Übersichtlichkeit in der Darstellung zu erzielen sind alle Sicherheitsventile in dieser Figur in Form des Rückschlagventils 216 ausgeführt. Dies ist aber erfindungsgemäß nicht zwingend notwendig und so können situationsbedingt unterschiedliche Ventile oder Ventilkombinationen im Zusammenhang mit dieser Sicherheitsfunktion verwendet werden. Die Verwendung unterschiedlicher Ventile oder Ventilkombinationen in Verbindung mit der jeweiligen Funktionalität der Ventile aus Figur 1 und 2 ist dabei ebenso für alle übrigen Ventile gegeben. Das in Figur 2 dargestellte Hydroaggregat 222 enthält zwei Bremskreise 220 und 230. Im folgenden wird nur ein Bremskreis im Detail beschrieben, die analogen Elemente im nicht explizit beschriebenen Bremskreis sind mit identischen Zahlen und dem Zusatz 'a' versehen. Ebenso wie die Sicherheitsventile 216 sind die in der Zeichnung verwendeten Filter 215 nicht einzeln bezeichnet sondern unter 215 zusammengefaßt. Die hier verwendete Anordnung der Filter ist ebenfalls nicht zwingend, die Filter sind beliebig, den Erfordernissen entsprechend setzbar.

Im zu beschreibenden Bremskreis 220 ist an der Hauptbremsleitung ein Drucksensor 214 angebracht. Ebenfalls an der Hauptbremsleitung sitzt eine Speicherkammer 207. Die Einleitung des Druckmediums in dem Bremskreis erfolgt über ein Vorladeventil 204. Diese steuerbaren Wegeventile 204 und 204a sind beispielsweise als elektromagnetisch steuerbare 2/2-Wegeventile ausgebildet und zwischen dem Hauptbremszylinder 219 und der Rückförderpumpe 203 angebracht. Ebenso wie in Figur 1 gilt auch hier, daß die spezielle Ausgestaltung der einzelnen Ventile und Ventilanordnungen variieren kann. Ausgangsseitig an die Rückförderpumpe 203 schließt sich die Dämpferkammer 208 an. In Richtung zum Hauptbremszylinder 103 sowie zu den jeweiligen Bremsdruckaufbauventilen, also den Einlaßventilen 209, 210 in die Radbremsen folgt die Drossel 213. Der Auslaß des Druckmediums aus dem Bremskreis wird über eine Kombination aus Umschaltventil und Druckbegrenzungsventil 205 gesteuert. Diese Kombination wird künftig nur noch als Umschaltventil 205 bezeichnet. Dieses Umschaltventil 205 ist mittels eines Rückschlagventils umgehbar, so daß dann wenn auf automatischen Bremsbetrieb geschaltet ist, bei ausreichender Betätigung des Bremspedals 100 sich Druck aus dem Hauptbremszylinder 219 bis zu den Ventilanordnungen zur Bremsdruckmodulation 209 bis 212 fortpflanzen kann. Von diesen Bremsventilanordnungen zur Bremsdruckmodulation wird 209 und 210 als Einlaßventil der jeweiligen Radbremse 223 bis 224 und 211 und 212 jeweils als Auslaßventil bezeichnet. An der Druckleitung, die von den Auslaßventilen 211 und 212 zur Rückförderpumpe 203 führt ist des weiteren ein Druckspeicher 206 angebracht. Die Rückförderpumpe 203 selbst wird über einen Motor 202 angetrieben. Dabei kann wie hier für beide Rückförderpumpen der Bremskreise ein Motor oder auch für jede Pumpe ein eigener Motor vorgesehen sein. Da diese Anordnung in Figur 2 nur beispielhaft ist, kann auch für jede Radbremse 223 bis 226 eine eigene Rückförderpumpe mit Pumpenmotor vorgesehen sein. Bezüglich der Einzelheiten der hydraulischen Schaltung wird hier auf das in Figur 2 dargestellte Ausführungsbeispiel verwiesen.

Die in Figur 1 und Figur 2 dargestellten Bremsanlagen sind beispielhaft für die in einem Fahrzeug einsetzbaren Bremsanlagen bzw. Bremssysteme. Dazu ist in Figur 3 eine allgemeinere Darstellungsweise gewählt. Die in Figur 1 bzw. Figur 2 beispielhaft herausgestellten Bremsanlagen sind dabei wahlweise im Block 300 enthalten. Lediglich die Radbremsen 307 bis 310 sind noch einmal separat dargestellt. Da jede Radbremse 307 bis 310 einem Rad zugeordnet ist, werden diesen mit 303 bis 306 die erfindungsgemäß verwendbaren Raddrehzahlsensoren zugeordnet. Eine Angabe zur Position der jeweiligen Radbremse 307 bis 310 im Fahrzeug ist wie in Figur 2 bewußt nicht getroffen, da für manche der erfindungsgemäßen Verfahren bzw. das System keine bestimmte Anordnung notwendig ist. Je nach verwendetem Verfahren können deshalb alle gebräuchlichen Bremskreisaufteilungen achsweise, überkreuzt, parallel, Einzelradbremsung, etc. eingesetzt werden.

Mit Block 301 ist schematisch ein, wie eingangs erwähntes Steuergerät für die Bremsanlage dargestellt. Block 302 zeigt eine weitere Logik bzw. ein weiteres Steuergerät, beispielsweise ein Motorsteuergerät und/oder eine übergeordnete Logik, beispielsweise für ABS, ASR, FDR, etc. Mit 316 sind Ausgangssignale aus dem Steuergerät 301, beispielsweise über eine Diagnoseleitung an ein weiteres Steuergerät dargestellt. Die hier getrennt dargestellten Systeme 301, 302 und ein mögliches Diagnosegerät über Leitung 316 können beliebig, auch in einem Steuergerät zusammengefaßt sein. Ebenso ist es möglich die Blöcke 301 und 302 in einem Steuergerät zu kombinieren. In 315 sind Eingangsgrößen in die übergeordnete Logik 302 (z.B. ABS, ASR, FDR) dargestellt. Dieses können Sensorsignale o.ä. sein. Die übergeordnete Logik ihrerseits 302 liefert Vorgaben an das Bremsensteuergerät 301.

Die zum Bremssystem gehörende Steuerung ist schematisch als Block 301 dargestellt. An die Steuerung 301 sind u.a. zum einen die einzelnen Ventile der Bremsanlage 300 und zum anderen die Motoren der einzelnen im Bremssystem verwendeten Pumpen angeschlossen. All diese Aktuatoren und alle weiteren werden über Leitungsbündel 312 angesteuert. Die bereits in Figur 1 und 2 dargestellte Sensorik ebenso wie die neu dargestellten Drehzahlsensoren 303 bis 306 liefern ihre Signale beispielsweise über Leitungsbündel 311 ebenso wie wenigstens ein möglicher, im Hydroaggregat integrierter Temperatursensor an die Steuerung 301. Daneben kann wenigstens ein Temperatursensor mit einem Teil der Steuerung 301 in thermischem Kontakt angeordnet werden. Darüber hinaus benötigte Leitungen für anderweitige Sensorik und Aktuatorik oder Anzeigeelemente sind mittels der Leitungsbündel 313 bzw. 314 dargestellt. Dabei sind die über Leitung 314 gelieferten Ausgangsgrößen aus der Bremsanlage ebenfalls in die übergeordnete Logik 302 (siehe 315) einspeisbar. Wenigstens ein eventuell vorhandener weiterer systemexterner Temperatursensor könnte über Leitungsbündel 313 an die Steuerung 301 angeschlossen werden. Der oder die Temperatursensoren sind mit wenigstens einem Teil der elektronischen Schaltung und/oder des Bremssystems in thermischem Kontakt angeordnet. Statt der Temperatursensoren oder in Verbindung mit ihnen können Temperaturermittlungverfahren, wie Schätzung oder Auswertung funktioneller, temperaturabhängiger Veränderungen, eingesetzt werden. Generell richtet sich die genaue Leitungs- und Anschlußzahl nach der jeweiligen Ausgestaltung und dem Funktionsumfang des Kraftfahrzeugs. Statt einer Vielzahl von Leitungen könnte für 311, 312, 313, 314, 315, 316 und die Verbindung der Steuergeräte auch ein Bussystem eingesetzt werden.

Durch die Steuerung werden beispielsweise Ventile vorbestromt um im Bedarfsfall eine schnellere Reaktion zu erreichen und es werden zum Bremsdruckaufbau die Einlaßventile geöffnet. Daneben können über die Steuerung die in der Bremsanlage vorhandenen Pumpen mit einem vorgebbaren Pulspausenverhältnis, getaktet angesteuert werden, beispielsweise um eine geringe Geräuschentwicklung zu gewährleisten. Ein gezieltes Bremsen, beispielsweise radindividuell oder beider Achsen gleichzeitig wird ebenfalls durch das Bremssystem, bzw. das Steuergerät möglich. Ebenso kann ein hoher bei EHB und HBV sogar größerer als vom Fahrer vorgebbarer Bremsdruck und/oder Systemdruck eingestellt werden, wenn dies die Situation erfordert.

Diese und andere durch beispielsweise ASR, ABS, FDR, ACC in Verbindung mit z.B. EHB bzw. HBV und anderen Bremssystemen verwendeten Regeleingriffe führen zu einer Erwärmung der Bauteile im Steuergerät. Deshalb wird abhängig von wenigstens einer Temperaturgrenze in Figur 4 eine verlustleistungsreduzierte Regelung VRE eingesetzt. Ausgehend von Block 400 (Start) werden abhängig von der jeweiligen Funktionalität (z.B. ASR, FDR, ABS, ACC, etc.) in Block 401 ein bestimmter Regeleingriff RE bzw. verschiedene Regeleingriffe RE durchgeführt. Je nach Art und Komplexität der eingesetzten Regelung kann es sich bei RE um einen Regeleingriff oder um mehrere handeln. Nach einer regelungsimmanenten und/oder einer vorgebbaren Zeit und/oder einem bestimmten Regelungsfortschritt wird in Block 402 abgefragt, ob die verwendeten Regeleingriffe RE weiterhin benötigt werden. Ist dies nicht der Fall gelangt man sofort zu Block 406 dem Verfahrensende. Müssen situationsbedingt die Regeleingriffe RE, also die eingesetzte Regelung bzw. Regelverfahren (z.B. ABS, ASR, FDR, ACC etc.) weiter aufrechterhalten werden, wird in Block 403 abgefragt, ob die Temperatur T wenigstens eines Teils der elektronischen Schaltung über einer vorgebbaren Temperaturgrenze Tg liegt. Die Temperatur T kann dabei einerseits mittels Temperaturerfassungsmitteln, die wenigstens mit einem Teil der elektronischen Schaltung in thermischem Kontakt angeordnet sind und/oder einem Temperaturschätzmodell und/oder der Auswertung typischer, funktioneller, temperaturabhängiger Veränderungen (z.B. Schwingungsverhalten von Druckreglern bei Hochtemperatur) bestimmt werden. Befindet sich die so bestimmte bzw. erfaßte Temperatur T nicht oberhalb der Grenztemperatur Tg werden die benötigten Regeleingriffe RE aus Block 401 wie vorgesehen weiter durchgeführt. Überschreitet die erfaßte Temperatur T die vorgebbare Temperaturgrenze Tg in Block 403 so wird in Block 404 eine verlustleistungsreduzierte Regelung VRE eingeleitet. Bei der verlustleistungsreduzierten Regelung VRE wird durch verschiedene Maßnahmen und Funktionalitäten, die nachfolgend noch erläutert werden eine Reduzierung der Verlustleistung und damit der Wärmeabgabe einerseits des wenigstens einen Teils der elektronischen Schaltung und andererseits der angesteuerten Aktuatorik bzw. der Verbraucher erreicht. In Block 405 wird überprüft ob die verlustleistungsreduzierte Regelung VRE situationsbedingt weiterhin benötigt wird. Dabei kann die VRE eigenständig ablaufen oder in Kombination mit der ursprünglich in Block 401 initiierten Regelung. Ist eine Regelung (VRE eigenständig oder in Kombination mit z.B. ABS, ASR, FDR, ACC, bzw. EHB, HBV, etc.) weiterhin nötig, wird wieder in Block 403 gegen die Temperaturgrenze Tg getestet. Kann die Regelung situationsbedingt abgebrochen werden, gelangt man auch hier zum Verfahrensende 406. In Block 404 können dabei die diversen Maßnahmen zur Verlustleistungsreduktion im Steuergerät und im gesamten Bremssystem in beliebiger Kombination abhängig von der Situation und dem verwendeten Bremssystem bzw. dem Fahrzeug eingesetzt werden.

In Figur 5 ist die Verwendung zweier Temperaturgrenzen Tg1 und Tg2 dargestellt. Das gezeichnete Flußdiagramm ist dabei von zwei zu einer beliebigen Anzahl von Temperaturgrenzen Tgn als Schwellwerte mit zugehörigen verlustleistungsreduzierten Regelungen VREn erweiterbar.

Ausgehend wieder vom Start in Block 400 werden situationsbedingt in Block 401 wieder die benötigten Regeleingriffe RE von z.B. ASR, ABS, FDR, ACC, etc. durchgeführt. Wie in Figur 4 wird nach einer vorgebbaren oder systemimmanenten Zeit bzw. mit dem Fortschreiten des Regelungsablaufs nach einem bestimmten Regelungsfortschritt in Block 402 abgefragt ob die Regeleingriffe RE situationsbedingt weiter notwendig sind. Ist dies nicht der Fall, gelangt man sofort zum Verfahrensende nach Block 406. Wird der Regeleingriff RE situationsbedingt weiter benötigt, wird in Block 500 die erfaßbare Temperatur T wenigstens eines Teils der elektronischen Schaltung abgefragt, ob diese größer einer ersten vorgebbaren Temperaturgrenze Tg1 ist. Ist dies nicht der Fall wird weiter mit den ursprünglichen Regleingriffen RE gearbeitet. Überschreitet die Temperatur T die erste Temperaturgrenze Tg1 wird im Block 501 eine erste verlustleistungsreduzierte Regelung VRE1 eingesetzt. Darin ist wenigstens eine der nachfolgend aufgeführten Maßnahmen bzw. Funktionen enthalten. Im Block 502 wird abgefragt ob die Regelstrategie VRE1 weiter benötigt wird. Dabei kann die Regelung VRE1 eigenständig ablaufen oder in Kombination mit der ursprünglich in Block 401 initiierten Regelung. Ist eine Regelung (VRE1 eigenständig oder in Kombination mit z.B. ABS, ASR, FDR, bzw. EHB, HBV, etc.) weiterhin nötig, wird in Block 503 gegen eine weitere Temperaturgrenze Tg2 getestet. Ist eine weitere Regelung situationsbedingt nicht nötig gelangt man zum Verfahrensende in Block 406. Wird die Regelung weiter nötig wird in Block 503 abgefragt ob die Temperatur T eine zweite Temperaturgrenze Tg2 überschreitet. Trifft dies nicht zu wird wieder in Block 500 überprüft ob die Temperatur T noch die erste Temperaturgrenze Tg1 überschreitet.

Wird die zweite Temperaturgrenze Tg2 in Block 503 überschritten, so wird in Block 504 eine zweite verlustleistungsreduzierte Regelung VRE2 eingesetzt. Auch hier ist wenigstens eine der nachfolgend erläuterten Maßnahmen bzw. Funktionen realisiert. In Block 506 wird ausgehend von Regelung VRE2 geprüft ob ein weiterer Regeleingriff weiter nötig ist oder nicht. Dabei kann die Regelung VRE2 eigenständig ablaufen oder in Kombination mit der ursprünglich in Block 401 initiierten Regelung sowie mit der in Block 501 realisierten Regelung VRE1. Ist eine weitere Regelung in diesem Zusammenhang nicht nötig, gelangt man zum Verfahrensende in Block 406. Wird generell eine Regelung weiterhin benötigt wird wiederum überprüft ob die Temperatur T eine erste Temperaturgrenze Tg1 überschreitet. Ist aufgrund der eingesetzten Regelverfahren die Temperatur T weit genug abgekühlt, so daß die Temperatur T die erste Temperaturgrenze Tg1 nicht überschreitet, wird zu den standardmäßig in der Situation benötigten Regeleingriffen RE in Block 401 zurückgesprungen und im Block 402 evtl., wenn der Regeleingriff RE situationsbedingt nicht mehr notwendig ist, die Regelung beendet.

Vorteilhafterweise kann, um ein schnelles hin- und herschalten (toggeln) an den Temperaturschwellen, also zwischen den Regelverfahren zu vermeiden eine Hysterese vorgesehen sein. Dabei wird zwar bei Erreichen der jeweiligen Temperaturgrenze in das zugeordnete Regelverfahren umgeschaltet, bei einem Absinken unter eine Temperaturgrenze ist aber eine gewisse Temperaturdifferenz vorgesehen, d.h. es wird erst ein wenig später zurückgeschaltet. Damit sind dann Ein- und Ausschalttemperaturschwellen einer zugehörigen Regelung nicht identisch.

Sieht man die Bremsanlage von Figur 1 in Block 300 der Figur 3 eingesetzt so ergeben sich folgende erfindungsgemäße Maßnahme um eine geringere Erwärmung zu erzielen.

Die aus dem Stand der Technik bekannte getaktete Ansteuerung beispielsweise der Speicherpumpe 108 bzw. des Pumpenmotors 107 wird nicht weiter durchgeführt. Dadurch, daß bei dieser Taktung der Pumpenmotor ständig an einer Effektivspannung liegt bzw. mit einem mittleren Strom versorgt wird entsteht eine kontinuierliche Erwärmung des Motors und durch die ständig aktive Regelung auch des Steuergeräts. Durch die häufigen Schaltvorgänge bekommen z.B. die Schalttransistoren beim Übergang von leitend zu nichtleitend die dabei auftretende Flankenverlustleistung ab, wodurch eine Erwärmung auftritt. Ebenso entsteht durch die Anlaufströme, die beim getakteten Ansteuern häufig auftreten eine starke Erwärmung. Statt dessen wird bei Bedarf bzw. wenigstens einer Auslösebedingung, was bei Unterschreiten eines bestimmten Brems- oder Systemdruckschwellwertes und/oder durch Regelungsvorgabe der übergeordneten Logik aus Figur 3 (z.B. ABS, ASR, FDR, ACC, etc.) und/oder durch Vorgaben des Bremssystems (z.B. HBV, EHB, etc.) geschehen kann, die Pumpe dauerangesteuert bzw. der Pumpenmotor 107 so lange bestromt bzw. an Spannung gelegt, bis die Auslösebedingung wieder abgeklungen ist und/oder eine vorgebbare Zeit vergangen ist und/oder der Vorgang durch die Regelung oder wenigstens eine weitere Bedingung beendet wird. Damit tritt die Flankenverlustleistung ebenso wie die Anlaufströme im Vergleich zur Taktung bei der bei Bedarf durchgeführten Daueransteuerung deutlich seltener auf, wodurch diese aus thermischen Gesichtspunkten besser ist.

Daneben kann durch gezielte Bremsdrucksteuerung eine Temperaturreduktion erzielt werden.

Dabei wird bei Fahrzeugstillstand der Bremsdruck auf das notwendige Maß reduziert, das ausreicht um das Fahrzeug am Wegrollen zu hindern. Die Absenkung des Bremsdruckes kann dabei beispielsweise durch Öffnen der Auslaßventile erfolgen oder schnell durch die optional vorhandenen Entlastungsventile 115o und 116o. Das notwendige Maß des Bremsdrucks kann dabei beispielsweise über die Raddrehzahlsensorik 303 bis 306 eingestellt werden. Zeigt wenigstens ein Drehzahlsensor 303, 304, 305, 306 die geringste Bewegung eines Rades an so wird der Bremsdruck in den Radbremsen 132 bis 135 gerade so weit erhöht um diese Bewegung zu stoppen. Um das Fahrzeug lediglich am Wegrollen im Stillstand zu hindern ist dabei sogar denkbar lediglich eine Radbremse anzusteuern.

Weitere bevorzugte Maßnahmen bzw. Funktionen und Verfahren zur Verringerung der Verlustleistung werden im Folgenden beschrieben. Dabei sind diese beliebig z.B. in den vorstehend genannten Regelungen VRE, VRE1 und VRE2 bzw. VREn einsetz- und kombinierbar. Bei einem Bremssystem werden zu diesem Zweck wärmeerzeugende Ansteuerungen in dem Zustand betrieben in dem die Verlustleistung so gering wie möglich ist. Diese Maßnahmen werden beispielhaft für die in Figur 1 und Figur 2 dargestellten Bremsanlagen im Weiteren diskutiert. Die meisten sind jedoch in einem allgemeinen Bremssystem, wie schematisch in Figur 3 dargestellt, einsetzbar.

Daneben kann zur Verlustleistungsreduzierung der Bremsdruckaufbau z.B. bei Stillstand oder geringer Verzögerung des Fahrzeugs nur auf einer Achse, VA oder HA, durchgeführt werden. Dies bedeutet, daß bei Bremsung mit sehr geringen Geschwindigkeiten oder im Stillstand wahlweise durch Ansteuerung der Ventile und der Pumpe 108 beispielsweise entweder die Vorderachse VA oder nur die Hinterachse HA gebremst wird, z.B. je nach möglicher Rollrichtung des Fahrzeugs. Dies kann durch Ansteuerung der jeweiligen Druckmodulatoren bzw. deren Ein- und Auslaßventilen (z.B. 118, 117 für VR) erfolgen. Bei Offenstellung des jeweiligen Ausgleichsventils 125 bzw. 126 kann die gesamte Achse, VA oder HA, mit nur einer Ein-/Auslaßventilkombination (z.B. 122, 121) angesteuert bzw. gebremst werden.

Damit kann Generell, auch bei normalen Bremsvorgängen z.B. bei höherer Geschwindigkeit unter Berücksichtigung von Sicherheitsaspekten beispielsweise mittels der Ein-/Auslaßventilkombination 118/117 und Ausgleichsventil 125 in Offenstellung die komplette Vorderachse VA gebremst, sprich beide Radbremsen 132 und 133 unter Druck gesetzt werden. Dadurch, daß dabei weniger der sonst notwendigen Ventile angesteuert werden müssen wird einerseits durch die Verwendung weniger Verbraucher und andererseits durch geringeren Regelaufwand die Wärmeerzeugung herabgesetzt.

Eine weitere Maßnahme ist die Absenkung des gesamten Systemdrucks, welcher beispielsweise durch Drucksensor 109 oder ein Schätzmodell erfaßbar ist. Damit muß die Pumpe 108 (Speicherladepumpe) gegen geringeren Druck pumpen wodurch deren Verlustleistung reduziert wird.

Eine weitere Möglichkeit die Verlustleistung zu reduzieren ist dadurch gegeben die Funktionalität bezüglich der Ventilansteuerung einzuschränken. Einerseits wird die Vorbestromung der Regelventile, das sind die Ventile, die zur Druckmodulation eingesetzt werden, also hier im Falle des Druckmodulators für die Radbremse VR 132 z.B. die Ventile 117, 118 die ein schnelleres dynamischen Ansprechen ermöglicht, abgesenkt wobei ein gering langsameres dynamisches Ansprechen des Druckreglers bzw. Druckmodulators in Kauf genommen wird. Ebenso kann die Bestromung der Schaltventile, das sind z.B. die Trennventile 111 und 112, abgesenkt werden, allerdings dabei unter Berücksichtigung der an den Ventilen anliegenden Druckdifferenzen, welche beispielsweise durch die Drucksensoren 110 und 129, 130, 136 und 131 erfaßt werden können. Schließlich kann der jeweilige Druckregler auch nur mit nicht bestromten Ausgleichsventil 125 bzw. 126 betrieben werden, da sich diese im nicht bestromten Zustand in Offenstellung befinden.

Dies kann beispielsweise bis zu einer sequentiellen Abschaltung aller radindividuellen Funktionen, wie beispielsweise querkraftabhängige Bremskraftverteilung, ASR, ABS, FDR führen. Durch die teilweise Reduzierung des Funktionsumfangs und der damit reduzierten Anzahl von Regeleingriffen bzw. der Reduktion der Dauer der Regeleingriffe kann die Wärmeentwicklung im Steuergerät sowie in der Steuergeräteumgebung, insbesondere im Bremssystem, reduziert werden.

Als weitere Maßnahme schließlich kann die Erkennung des Bremswunsches des Fahrers dahingehend modifiziert werden, daß der Volumenverbrauch an Druckmedium minimiert wird. Dies kann beispielsweise durch einen verzögerten Druckaufbau und/oder Druckabbau bei schnell wechselnden Bremspedalbewegungen erfolgen, da dadurch ein unnötiges bzw. zu häufiges Ansteuern von Ventilen und Pumpe verhindert wird. Unter Berücksichtigung von Sicherheitsgrenzen kann dabei die Verzögerungszeit des Druckaufbaus und/oder Druckabbaus bis zu einer Maximalgrenze vorgegeben bzw. im Lauf eines der Verfahren nach Figur 4 bzw. 5 korrigiert werden.

Ebenso kann unter Annahme der Bremsanlage aus Figur 2 in Block 300 der Figur 3 mit diesen Maßnahmen auch eine Temperaturreduzierung beispielsweise auch bei hydraulischer Bremskraftverstärkung erzielt werden.

Auch hierbei wird die aus dem Stand der Technik bekannte getaktete Ansteuerung beispielsweise der Pumpe 203 (Rückförderpumpe) bzw. des Pumpenmotors 202 nicht weiter durchgeführt. Dadurch, daß bei dieser Taktung der Pumpenmotor auch hier ständig an einer Effektivspannung liegt bzw. mit einem mittleren Strom versorgt wird entsteht eine kontinuierliche Erwärmung des Motors und durch die ständig aktive Regelung auch des Steuergeräts. Statt dessen wird bei Bedarf bzw. wenigstens einer Auslösebedingung, was bei Unterschreiten eines bestimmten Brems- oder Systemdruckschwellwertes und/oder durch Regelungsvorgabe der übergeordneten Logik aus Figur 3 (z.B. ABS, ASR, FDR, ACC, etc.) und/oder durch Vorgaben des Bremssystems (z.B. HBV, etc.) geschehen kann, die Pumpe dauerangesteuert bzw. der Pumpenmotor 202 so lange bestromt bzw. an Spannung gelegt, bis die Auslösebedingung wieder abgeklungen ist und/oder eine vorgebbare Zeit vergangen ist und/oder der Vorgang durch die Regelung oder wenigstens eine weitere Bedingung beendet wird. Auch hier tritt wie vorher genannt die Flankenverlustleistung ebenso wie die Anlaufströme im Vergleich zur Taktung bei der bei Bedarf durchgeführten Daueransteuerung deutlich seltener auf, wodurch diese aus thermischen Gesichtspunkten besser ist. Analoges gilt für eventuell weiterhin im Bremskreis vorhandene Pumpe wie z.B. die Ladepumpe 200.

Daneben kann analog durch gezielte Bremsdrucksteuerung eine Temperaturreduktion erzielt werden.

Dabei wird bei Fahrzeugstillstand der Bremsdruck auf das notwendige Maß reduziert, das ausreicht um das Fahrzeug am Wegrollen zu hindern. Die Absenkung des Bremsdruckes kann dabei beispielsweise durch Öffnen der Auslaßventile 211 und/oder 212 (analog 211a, 212a) erfolgen. Das notwendige Maß des Bremsdrucks kann dabei beispielsweise über die Raddrehzahlsensorik 303 bis 306 eingestellt werden. Zeigt wenigstens ein Drehzahlsensor 303, 304, 305, 306 die geringste Bewegung eines Rades an so wird der Bremsdruck in den Radbremsen 223 bis 226 gerade so weit erhöht um diese Bewegung zu stoppen. Um das Fahrzeug lediglich am Wegrollen im Stillstand zu hindern ist dabei sogar denkbar lediglich eine Radbremse, z.B. 223 anzusteuern.

Daneben kann zur Verlustleistungsreduzierung der Bremsdruckaufbau z.B. bei Stillstand oder geringer Verzögerung des Fahrzeugs bei z.B. achsweiser Bremskreisaufteilung nur auf einer Achse, VA oder HA, durchgeführt werden. Dabei enthält die VA z.B. Radbremse 223 und 224 und die Hinterachse Radbremse 225 und 226. Dies bedeutet, daß bei Bremsung bei sehr geringen Geschwindigkeiten bzw. mit geringer Verzögerung oder im Stillstand wahlweise beispielsweise entweder die Vorderachse VA oder nur die Hinterachse HA gebremst wird, z.B. je nach möglicher Rollrichtung des Fahrzeugs z.B. durch Druckaufbau in nur einem Bremskreis. Dies kann durch Ansteuerung der jeweiligen Ein- und Auslaßventile (z.B. 209 bis 212 bei VA) und des Umschalt- (205) sowie des Vorlade- bzw. Ansaugventils (204) erfolgen. Bei Offenstellung der Einlaßventile 209 und 210 kann die gesamte Achse VA (oder HA), mit nur einem Umschaltventil 205 angesteuert bzw. gebremst werden, wenn über die Ansteuerung des Ansaugventils 204 bereits Bremsdruck aufgebaut wurde. Für den Fall des Druckabbaus gilt dies analog bei unbestromten Auslaßventilen 211 und 212.

Damit kann Generell, auch bei normalen Bremsvorgängen z.B. bei höherer Geschwindigkeit unter Berücksichtigung von Sicherheitsaspekten beispielsweise mittels der Ein- und Auslaßventile 209 bis 212 in unbestromtem Zustand mit dem Umschaltventil 205 die komplette Vorderachse VA gebremst, sprich beide Radbremsen 223 und 224 unter Druck gesetzt werden. Analoges gilt wie vorher genannt für den Druckabbau an dieser Stelle, z.B. bei Einsatz von FDR oder ABS. Dadurch, daß dabei weniger der sonst notwendigen Ventile angesteuert werden müssen wird einerseits durch die Verwendung weniger Verbraucher und andererseits durch geringeren Regelaufwand die Wärmeerzeugung herabgesetzt.

Eine weitere Maßnahme ist die Absenkung des gesamten Systemdrucks, welcher beispielsweise ein Schätzmodell oder einen Drucksensor erfaßbar ist. Damit muß die Pumpe 203 (Rückförderpumpe) gegen geringeren Druck pumpen wodurch deren Verlustleistung reduziert wird.

Eine weitere Möglichkeit die Verlustleistung zu reduzieren ist dadurch gegeben die Funktionalität bezüglich der Ventilansteuerung einzuschränken. Einerseits wird die Vorbestromung der Regelventile, das sind die Ventile, die zur Druckmodulation eingesetzt werden, also hier im Falle des Druckmodulators für die Radbremse 223 z.B. die Ventile 209 und 211, die ein schnelleres dynamischen Ansprechen ermöglicht, abgesenkt wobei ein gering langsameres dynamisches Ansprechen beim Druckaufbau in Kauf genommen wird. Ebenso kann die Bestromung der Umschaltventile 205, 205a und der Vorlade- bzw. Ansaugventile 204, 204a, abgesenkt werden, allerdings dabei unter Berücksichtigung der an den Ventilen anliegenden Druckdifferenzen, welche beispielsweise durch den Drucksensor 214 und/oder Druckschätzung erfaßt werden können.

Dies kann beispielsweise bis zu einer sequentiellen Abschaltung aller radindividuellen Funktionen, wie beispielsweise querkraftabhängige Bremskraftverteilung, ASR, ABS, FDR führen. Durch die teilweise Reduzierung des Funktionsumfangs und der damit reduzierten Anzahl von Regeleingriffen bzw. der Reduktion der Dauer der Regeleingriffe kann die Wärmeentwicklung im Steuergerät sowie in der Steuergeräteumgebung, insbesondere im Bremssystem, reduziert werden.

Als weitere Maßnahme schließlich kann die Erkennung des Bremswunsches des Fahrers dahingehend modifiziert werden, daß der Volumenverbrauch an Druckmedium minimiert wird. Dies kann beispielsweise durch einen verzögerten Druckaufbau und/oder Druckabbau bei schnell wechselnden Bremspedalbewegungen erfolgen, da dadurch ein unnötiges bzw. zu häufiges Ansteuern von Ventilen und Pumpe verhindert wird. Unter Berücksichtigung von Sicherheitsgrenzen kann dabei die Verzögerungszeit des Druckaufbaus und/oder Druckabbaus bis zu einer Maximalgrenze vorgegeben bzw. im Lauf eines der Verfahren nach Figur 4 bzw. 5 korrigiert werden.

Allgemein ist zu sagen, daß die vorstehend aufgeführten Maßnahmen generell in allen mit den Ausführungsbeispielen vergleichbar aufgebauten Bremssystemen wie zu Beginn ausgeführt eingesetzt werden können und somit eine gute Möglichkeit der Reduzierung der Verlustleistung im Bremssystem, insbesondere im Steuergerät, und somit eine Verringerung der Erwärmung ergeben.

## Patentansprüche

1. Verfahren zur Steuerung und/oder Regelung von Betriebsabläufen in einem Bremssystem eines Fahrzeugs mit
- einer die Betriebsabläufe steuernden und/oder regelnden elektronischen Schaltung (301) und
- Verbrauchern, insbesondere wenigstens ein ein Druckmedium förderndes Mittel (z.B. 108) und
- wenigstens einer Absperrvorrichtung (z.B. 111, 117, 118, 125) für Einlaß und/oder Auslaß und/oder Durchlaß des Druckmediums, sowie
- wenigstens einem Temperaturerfassungsmittel, das mit wenigstens einem Teil der elektronischen Schaltung und/oder mit wenigstens einem Teil des Bremssystems in thermischem Kontakt angeordnet ist und/oder Temperaturermittlungsverfahren,
wobei
- eine die Temperatur dieses Teils repräsentierender Temperaturwert (T) erfaßt und/oder ermittelt wird, und
- erkannt wird, ob der Temperaturwert (T) wenigstens einen Schwellwert (Tg1, Tg2 .., Tgn) überschreitet, und
- wenigstens eine Maßnahme (VRE1, VRE2 .., VREn) eingeleitet wird, je nachdem welcher Schwellwert (Tg1, Tg2 .. , Tgn) überschritten wird,
wobei bei wenigstens einer Maßnahme bei Bedarf eine Daueransteuerung wenigstens eines ein Druckmedium fördernden Mittels des Bremssystems mit einer vorgebbaren, und/oder variablen Zeitdauer durchgeführt wird.

2. Verfahren nach Anspruch 1, **dadurch gekennzeichnet, daß** der wenigstens eine Schwellwert derartig vorgegeben ist, daß
- bei Überschreitung des Schwellwerts die wenigstens eine Maßnahme eingeleitet wird und
- bei Unterschreitung des Schwellwerts erst nach Unterschreitung eines vorgebbaren Differenzwertes zum Schwellwert die eingeleitete wenigstens eine Maßnahme gestoppt und/oder wenigstens eine andere Maßnahme eingeleitet wird.

3. Verfahren nach einem der vorhergehenden Ansprüche, **dadurch gekennzeichnet, daß** die wenigstens eine Maßnahme
- eine Verlustleistung und/oder die Temperatur wenigstens eines Teils der elektronischen Schaltung reduziert oder
- einen Anstieg der Verlustleistung und/oder der Temperatur verhindert oder verlangsamt.

4. Verfahren nach Anspruch 1 oder 2, **dadurch gekennzeichnet, daß** die wenigstens eine Maßnahme
- eine Verlustleistung und/oder die Temperatur wenigstens eines Teils der elektronischen Schaltung und/oder wenigstens eines Teils des Bremssystems reduziert oder
- einen Anstieg der Verlustleistung und/oder der Temperatur verhindert oder verlangsamt.

5. Verfahren nach Anspruch 1 oder 2, **dadurch gekennzeichnet, daß** die wenigstens eine Maßnahme eine Absenkung wenigstens eines im Bremssystem herrschenden Drucks im Druckmedium ist.

6. Verfahren nach Anspruch 1 oder 2, **dadurch gekennzeichnet, daß** die wenigstens eine Maßnahme das Abschalten wählbarer Verbraucher ist und/oder ersatzweise das Ansteuern anderer wählbarer Verbraucher.

7. Verfahren nach Anspruch 1 oder 2, **dadurch gekennzeichnet, daß** die wenigstens eine Maßnahme das Verhindern und/oder Einschränken einer vorzeitigen Ansteuerung, insbesondere ein Vorbestromen der Absperrvorrichtungen für Einlaß und/oder Auslaß und/oder Durchlaß, wenigstens eines wählbaren Verbrauchers ist.

8. Verfahren nach Anspruch 1 oder 2, **dadurch gekennzeichnet, daß** wenigstens eine der Maßnahmen das Ansteuern wenigstens eines wählbaren Verbrauchers mit einer vorgebbaren und/oder variablen Verzögerungszeit ist.

9. System zur Steuerung und/oder Regelung von Betriebsabläufen in einem Bremssystem eines Fahrzeugs mit
- einer die Betriebsabläufe steuernden und/oder regelnden elektronischen Schaltung (301) und
- Verbrauchern, insbesondere wenigstens ein ein Druckmedium förderndes Mittel (z.B. 108) und
- wenigstens einer Absperrvorrichtung (z.B. 111, 117, 118, 125) für Einlaß und/oder Auslaß und/oder Durchlaß des Druckmediums, sowie
- wenigstens einem Temperaturerfassungsmittel, das mit wenigstens einem Teil der elektronischen Schaltung und/oder mit wenigstens einem Teil des Bremssystems in thermischem Kontakt angeordnet ist und/oder einem Mittel, mit dem ein Temperaturermittlungsverfahren durchgeführt wird,
wobei
- ein die Temperatur dieses Teils repräsentierender Temperaturwert (T) erfaßt und/oder ermittelt wird, und
- Mittel vorgesehen sind, mittels derer erkannt wird, ob der Temperaturwert (T) wenigstens einen Schwellwert (Tg1, Tg2 .. , Tgn) überschreitet, und
- Mittel vorgesehen sind, die wenigstens eine Maßnahme (VRE1, VRE2 .. , VREn) einleiten, je nachdem welcher Schwellwert (Tg1, Tg2 .. , Tgn) überschritten wird,
wobei bei wenigstens einer Maßnahme bei Bedarf eine Daueransteuerung wenigstens eines ein Druckmedium fördernden Mittels des Bremssystems mit einer vorgebbaren, und/oder variablen Zeitdauer durchgeführt wird.

## Claims

1. Method for performing open-loop and/or closed-loop control of operating sequences in a brake system of a vehicle, having
- an electronic circuit (301) which performs open-loop and/or closed-loop control of the operating sequences, and
- actuators, in particular at least one means (for example 108) which feeds a pressure medium, and
- at least one shut-off device (for example 111, 117, 118, 125) for admission and/or discharge and/or passage of the pressure medium, and
- at least one temperature measuring means which is arranged in thermal contact with at least part of the electronic circuit and/or with at least part of the brake system, and/or temperature measuring method,
- a temperature value (T) which represents the temperature of this part being measured and/or determined, and
- it being detected whether the temperature value (T) exceeds at least one threshold value (Tg1, Tg2.., Tgn), and
- at least one measure (VRE1, VRE2.., VREn) being initiated depending on which threshold value (Tg1, Tg2.., Tgn) is exceeded,
in which method, for at least one measure, continuous actuation of at least one means of the brake system which feeds a pressure medium is carried out for a predefinable and/or variable time period when required.

2. Method according to Claim 1, **characterized in that** the at least one threshold value is predefined in such a way that
- when the value exceeds the threshold value the at least one measure is initiated, and
- when the value drops below the threshold value the initiated at least one measure is not stopped and/or at least one other measure is not initiated until the value drops below a predefinable difference value with respect to the threshold value.

3. Method according to one of the preceding claims, **characterized in that** the at least one measure
- reduces a power loss and/or the temperature of at least part of the electronic circuit, or
- prevents or slows down a rise in the power loss and/or the temperature.

4. Method according to Claim 1 or 2, **characterized in that** the at least one measure
- reduces a power loss and/or the temperature of at least part of the electronic circuit and/or at least part of the brake system or
- prevents or slows down a rise in the power loss and/or the temperature.

5. Method according to Claim 1 or 2, **characterized in that** the at least one measure is a reduction of at least a pressure in the pressure medium which prevails in the brake system.

6. Method according to Claim 1 or 2, **characterized in that** the at least one measure is the switching off of selectable actuators and/or alternatively the actuation of other selectable actuators.

7. Method according to Claim 1 or 2, **characterized in that** the at least one measure is preventing and/or restricting premature actuation, in particular premature application of a current to the shut-off devices for admission and/or discharge and/or passage, of at least one selectable actuator.

8. Method according to Claim 1 or 2, **characterized in that** at least one of the measures is the actuation of at least one selectable actuator with a predefinable and/or variable delay time.

9. System for performing open-loop and/or closed-loop control of operating sequences in a brake system of a vehicle, having
- an electronic circuit (301) which performs open-loop and/or closed-loop control of the operating sequences, and
- actuators, in particular at least one means (for example 108) which feeds a pressure medium, and
- at least one shut-off device (for example 111, 117, 118, 125) for admission and/or discharge and/or passage of the pressure medium, and
- at least one temperature measuring means which is arranged in thermal contact with at least part of the electronic circuit and/or with at least part of the brake system, and/or a means with which a temperature determining method is carried out,
in which method
- a temperature value (T) which represents the temperature of this part is measured and/or determined, and
- means are provided with which it is detected whether the temperature value (T) exceeds at least one threshold value (Tg1, Tg2.., Tgn), and
- means are provided which initiate at least one measure (VRE1, VRE2.., VREn) depending on which threshold value (Tg1, Tg2.., Tgn) is exceeded,
in which method, for at least one measure, continuous actuation of at least one means of the brake system which feeds a pressure medium is carried out for a predefinable and/or variable time period when required.

## Revendications

1. Procédé de commande et/ou de réglage de séquences de fonctionnement d'un système de freinage d'un véhicule comprenant :
- une commutation (301) électronique commandant et/ou régulant les séquences de fonctionnement,
- des récepteurs, notamment au moins un moyen (par exemple 108) transportant un fluide hydraulique,
- au moins un dispositif d'arrêt (par exemple 111, 117, 118, 125) pour l'admission et/ou l'évacuation et/ou le passage du fluide hydraulique, et
- au moins un moyen de détection de la température en contact thermique avec au moins une partie de la commutation électronique et/ou au moins une partie du système de freinage et/ou un procédé de détermination de la température, selon lequel
- on saisit et/ou on détermine une valeur de température (T) représentant la température de cette partie,
- on reconnaît si la valeur de température (T) dépasse au moins une valeur de seuil (Tg1, Tg2,...,Tgn), et
- on introduit au moins une mesure (VRE1, VRE2.., VREn) suivant la valeur de seuil (Tg1, Tg2.., Tgn) dépassée, et
- dans le cas d'au moins une mesure, on effectue une commande durable d'au moins un moyen transportant le fluide hydraulique du système de freinage avec une durée prédéfinie et/ ou variable.

2. Procédé selon la revendication 1,
**caractérisé en ce qu'**
on détermine au moins une valeur de seuil de manière à ce que
- si le résultat est supérieur à la valeur de seuil, la mesure est mise en place, et
- si le résultat est inférieur à la valeur de seuil, la mesure introduite n'est arrêtée et/ou au moins une autre mesure n'est prise qu'après qu'une valeur différentielle prédéfinie soit inférieure à la valeur de seuil.

3. Procédé selon l'une des revendications précédentes,
**caractérisé en ce que**
la mesure
- réduit les pertes en puissance et/ou la température d'au moins une partie de la commutation électronique, ou
- empêche ou ralentit une augmentation des pertes en puissance et/ou de la température.

4. Procédé selon la revendication 1 ou 2,
**caractérisé en ce que**
la mesure
- réduit des pertes en puissance et/ou la température d'au moins une partie de la commutation électronique et/ou au moins une partie du système de freinage, ou
- empêche ou ralentit une augmentation des pertes en puissance et/ou de la température.

5. Procédé selon la revendication 1 ou 2,
**caractérisé en ce que**
la mesure est une baisse d'au moins une pression régnant dans le système de freinage dans le fluide hydraulique.

6. Procédé selon la revendication 1 ou 2,
**caractérisé en ce que**
la mesure est la coupure des récepteurs sélectionnable et/ou, en remplacement, la commande d'autres récepteurs sélectionnables.

7. Procédé selon la revendication 1 ou 2,
**caractérisé en ce que**
la mesure consiste à empêcher et/ou à limiter une commande prématurée, notamment une alimentation préalable en courant des dispositifs de blocage pour l'admission et/ou l'évacuation et/ou le passage d'au moins un récepteur sélectionnable.

8. Procédé selon la revendication 1 ou 2,
**caractérisé en ce qu'**
au moins une des mesures consiste à commander au moins un récepteur sélectionnable avec une durée de temporisation pré-déterminée et/ou variable.

9. Système de commande et/ou de régulation de séquences de fonctionnement d'un système de freinage de véhicule, comprenant :
- une commutation (301) électronique commandant et/ou régulant les séquences de fonctionnement,
- des récepteurs, notamment au moins un moyen (par exemple 108) transportant un fluide hydraulique,
- au moins un dispositif d'arrêt (par exemple 111, 117, 118, 125) pour l'admission et/ou l'évacuation et/ou le passage du fluide hydraulique, et
- au moins un moyen de détection de la température en contact thermique avec au moins une partie de la commutation électronique et/ou au moins une partie du système de freinage et/ou un moyen permettant d'effectuer un procédé de détermination de la température, dans lequel
- on détecte et/ou on détermine une valeur de température (T) représentant la température de cette partie
- des moyens reconnaissant si la valeur de température (T) dépasse au moins une valeur de seuil (Tg1, Tg2,..., Tgn), et
- des moyens introduisent au moins une mesure (VRE1, VRE2.., VREn) suivant la valeur de seuil (Tg1, Tg2.., Tgn) dépassée, et dans le cas d'au moins une mesure, effectuant une commande durable d'au moins un moyen transportant le fluide hydraulique du système de freinage, au besoin avec une durée donnée et/ ou variable.
